# EUROPEAN PATENT SPECIFICATION

(11) **EP 2 174 967 B1**
(45) Date of publication and mention of the grant of the patent: **20.02.2013**
(21) Application number: 09172245.4
(22) Date of filing: 05.10.2009
(51) Int. Cl.: C08G 18/02, C08G 18/08, C08G 18/28, C08G 18/79, C08G 18/80, C08G 18/68, C09D 175/04

(54) **Polyisocyanates suitable for the formulation of paints and varnishes with a low solvent content, and process for the preparation thereof**
Polyisocyanate geeignet für die Formulierung von Farben und Lacken mit niedrigem Lösungsmittelgehalt, und Verfahren zu ihrer Herstellung
Polyisocyanates à faible teneur en solvant adaptés pour la formulation de peintures et laques, et procédé pour leur préparation

(30) Priority: 06.10.2008 IT MI20081768
(43) Date of publication of application: 14.04.2010
(73) Proprietor: Societa' Azionaria per l'Industria Chimica Italiana S.A.P.I.C.I. S.p.A., 13900 Biella (IT)
(72) Inventor: Gaglioppa, Giorgio, 20063, CERNUSCO SUL NAVIGLIO (MI) (IT); Furiosi, Cristian, 20063, CERNUSCO SUL NAVIGLIO (MI) (IT); Zanetti, Luca, 20063, CERNUSCO SUL NAVIGLIO (MI) (IT); Neri Mari, Matteo, 20063, CERNUSCO SUL NAVIGLIO (MI) (IT); Bucaria, Francesca, 20063, CERNUSCO SUL NAVIGLIO (MI) (IT)
(74) Representative: Minoja, Fabrizio

(56) References cited:
- EP-A1- 1 378 530
- FR-A- 1 337 621

## Description

The present invention relates to a polyisocyanate suitable for the formulation of paints with a low solvent content. The invention also relates to a process for its preparation, and formulations containing it.

### Prior art

Numerous methods of preparing polyisocyanates containing isocyanurate groups are known (J.H. Saunders and K.C. Frisch, Polyurethanes: Chemistry and Technology, pp. 94 onwards, 1962).

Trimers based on both aromatic and aliphatic diisocyanates are universally used as raw material to prepare paints, polyurethane elastomers and polyurethane foams.

Polyisocyanates of this type are used as hardeners in two-pack systems with compounds that react with isocyanates, such as polyethers, polyesters, polyamides, polycarbonates, polyacrylates, polybutadiene, and hybrid forms of said polymers with hydroxyl functionality.

In particular, isocyanurate trimers obtained from toluene diisocyanate (TDI) are widely used in the wood and furnishing paint industry due to their high reactivity, and in particular as crosslinking agents in two-pack quick-drying systems.

Trimer products with a low content of free monomer are preferable from the occupational health and safety standpoint.

These products can be prepared by driving the reaction to high conversions, until the monomer is largely transformed into isocyanurate oligomers.

This method is widely used in cases where the two isocyanate monomer groups have different reactivities, as in the case of 2,4-toluene diisocyanate.

Products with a solvent base of this type can be prepared by this method with a TDI monomer residue < 0.1% (such as POLURENE IR 51 AB - 01®, produced commercially by SAPICI S.p.A, 50% w/w polyisocyanate diluted in butyl acetate, 8.0% content of free NCO groups).

The recently introduced EU Directive 42/04, which imposes limitations on emissions of volatile organic compounds (VOC) caused by the use of organic solvents in some paints and varnishes, is designed to prevent the marketing of some products with a high VOC content which may contribute to atmospheric pollution, causing an increase in ozone and photochemical oxidants in the boundary layer of the troposphere, or may affect some processes of acidification of the atmosphere.

The table below summarises the limits on VOC content laid down by said Directive for ready-to-use products in category A (paints and varnishes).

### A. MAXIMUM VOC CONTENT LIMIT VALUES FOR PAINTS A\D VARNISHES

| | Product Subcategory | Type | Phase I (g/l (*)) {from 1.1.2007) | Phase II (g/l (*)) (from 1.1.2010) |
|---|---|---|---|---|
| a | Interior mall walls and ceilings (Gloss < 25@60°) | WB | 75 | 30 |
| | | SB | 400 | 30 |
| b | interior glossy walls and ceilings (Gloss > 25@60°) | WB | 150 | 100 |
| | | SB | 400 | 100 |
| c | Exterior walls of mineral substrate | WB | 75 | 40 |
| | | SB | 450 | 430 |
| d | Interior/exterior trim and cladding paints for wood and metal | WB | 150 | 130 |
| | | SB | 400 | 300 |
| e | Interior/exterior trim varnishes and woodstains, including opaque woostains | WB | 150 | 130 |
| | | SB | 500 | 400 |
| f | Interior and exterior mining build woodstains | WB | 150 | 130 |
| | | SB | 700 | 700 |
| B | Primers | WB | 50 | 30 |
| | | SB | 450 | 350 |
| h | Binding primers | WB | 50 | 30 |
| | | SB | 750 | 750 |
| i | One-pack performance coatings | WB | 140 | 140 |
| | | SB | 600 | 500 |
| j | Two-pack reactive performance coatings for specific end use such as floors | WB | 140 | 140 |
| | | SB | 550 | 500 |
| k | Multi-coloured coatings | WB | 150 | 100 |
| | | SB | 400 | 100 |
| l | Decorative effect coating | WB | 300 | 200 |
| | | SB | 500 | 200 |
| (*) gel ready in use | | | | |

The polyisocyanate products containing TDI-based isocyanurate groups currently present on the market have a solvent content of 45-80% w/w.

These compounds are used in conventional formulations in combination with compounds that react with isocyanates in two-pack systems to obtain final paints which, for non-contained uses (especially in the construction industry), exceed the limit laid down by Directive 2004/42/EC.

As regards contained emissions from industrial plants (which are not covered by said Directive), such as large painting works, the limits imposed by the increasingly restrictive legislation (see, for example, Council Directive 96/61/EC concerning integrated pollution prevention and control, IPPC) are forcing the market to conduct research into VOC-free products (e.g. with an aqueous base) or in any event products with a low solvent content.

It is known that the viscosity of the end product can be reduced, and the dry residue consequently increased, by reacting isocyanate monomer with long-chain alcohol compounds, but this leads to a reduction in isocyanate-reactive groups and a consequent reduction in reactivity at the crosslinking stage (US 5,208,334).

It is also known that products with a low molecular weight, and consequently with a lower solvent content (final viscosity being equal), can be obtained by terminating the curing process prematurely, before all the monomer has been converted to higher oligomers; however, this leads to very high isocyanate monomer residues, with consequent occupational health and safety problems (US 4,801,663).

The document FR13 37 621 relates to a process for producing trimers of TDI. In the examples 1-, the trimerized TDI are prepared by mixing TDI monomers with a solvent, in the presence of a catalyst. Then, the catalyst is deactivated by addition of phosphoric acid. The polyisocyanate obtained has an NCO content of greater than 10% and a TDI monomer content of less than 1 % . However, no disclosure about the dry residue and the viscosity of the product is made.

The document EP1 378 530 A1 relates to the preparation of low monomer content of TDI trimers. In the example 1, butylacetate and TDI are mixed in the presence of a catalyst. The final product has a viscosity of 1300 mPas, a monomer content of 0,05% but an NCO content of 8,0%, which is not greater than 10%. Moreover, the dry residue in D2 is equal to 50%.

### Summary of the invention

A process has now been found for obtaining a polyisocyanate containing isocyanurate groups from toluene diisocyanate (TDI), characterised by a lower VOC solvent content than existing products on the market although its viscosity allows the formulation of two-pack paints wherein the final dry residue of the mixture of "component A" (base resin) + "component B" (hardener) exceeds 50% w/w (ie. the VOC solvent content is under 50% w/w).

The purpose of the present invention is therefore to provide a preparation method for solutions of TDI trimers which combine a low VOC content with viscosity comparable with that of conventional products, a free monomer content of under 1% w/w, and an isocyanate-reactive group content > 14% w/w, calculated on the undiluted polymer.

The aim of the invention is achieved by a process characterised by a TDI trimerisation reaction in the absence of solvent which is terminated at low conversions, to give a polyisocyanate product with a mean molecular weight of between 500 and 1500 amu.

The excess monomer is then distilled, and the residue diluted in a suitable solvent.

This technique is widely used for the production of polyisocyanates containing isocyanurate groups, especially where the diisocyanate has isocyanate groups with the same reactivity, to obtain products with a low free monomer content, but for purposes different from those disclosed in the present invention (DE-A 3 420 923, DE-A 19 618 230).

Another known process is the preparation of diisocyanates with isocyanate groups of different reactivity, such as 2,4 toluene diisocyanate, by reaction at high conversions, until the monomer is largely converted to isocyanurate oligomers, thus avoiding multi-stage processes with separation of the final free monomer by expensive separation or distillation techniques, but obtaining a polymer with a much higher mean molecular weight than the one obtained by the process according to the invention, and consequently a final formulation (paint) which requires the use of larger quantities of VOC solvents for application purposes.

The invention therefore provides a polyisocyanate obtained by trimerizing toluene diisocyanate, characterised by:
- a VOC solvent content of under 40% w/w, preferably between 40% and 20% w/w;
- viscosity between 500 and 2000 mPas, measured at 23°C;
- a toluene diisocyanate monomer content of under 1% by weight;
- a mean molecular weight under 1500 amu.
- an isocyanate-reactive group content exceeding 14% by weight of the undiluted polymer.

The invention also provides a process for the preparation of said polyisocyanate, which comprises:
- trimerisation of TDI in the absence of solvent, and in the presence of a catalyst and an alkanol (C6-C10);
- termination of the reaction, when the conversion of the isocyanate monomer groups to isocyanurate groups is between 10 and 60%, with an inhibitor selected from protic acids, acid chlorides or methylating agents;
- removal of unreacted isocyanate monomer by distillation;
- optional dilution of residue in a solvent.

The process according to the invention produces new products with special characteristics, never previously described.

The invention also relates to the formulation of mixtures of the products obtainable by said process with other aromatic or aliphatic polyisocyanates to improve their performance characteristics in terms of reactivity, chemical and mechanical resistance, and light resistance.

Unlike analogues synthesised by simple catalytic reaction in solvent until nearly all the monomer has been converted to higher oligomers, the products thus obtained have a significantly lower VOC solvent content, viscosity bring equal, with a free monomer content < 1% and a high content of isocyanate-reactive groups.

### Description of the invention

The trimerisation reaction of diisocyanate is conducted at temperatures of between 20°C and 120°C, and preferably between 50°C and 80°C, in the presence of a catalyst and a long-chain alcohol.

The reaction time is generally between 1 and 100 hours, and preferably between 5 and 15 hours. The reaction must be stopped when the conversion of the isocyanate monomer groups to isocyanurate groups is between 10 and 70%, and preferably between 40 and 60%.

The diisocyanates usable according to the invention preferably consist of 2,4 and/or 2,6 toluene diisocyanate, in the amount of at least 80% by weight, and preferably 90% by weight. A mixture of 2,4 and 2,6 toluene diisocyanate isomers, in particular a mixture of 75-85% by weight of isomer 2,4 and 25-15% by weight of isomer 2,6, is particularly preferred.

Catalysts suitable to initiate and accelerate the trimerisation reaction include special systems which lead to selective incorporation of TDI even at relatively high temperatures. Catalyst systems of this kind have OH phenol groups and N,N- dialkylaminomethyl groups bonded to an aromatic ring wherein the alkyl groups bonded to nitrogen, which are equal or different, are a C1-C3 alkyl or C1-C18 group, possibly interrupted by one or more oxygen or sulphur atoms. These groups may be present on one or more aromatic rings. The preferred catalyst systems are compounds which contain both OH groups and dialkylaminomethyl groups on a single molecule, particularly systems with C1-C3 dialkylaminomethyl groups in the ortho position to aromatic hydroxyl groups. Examples of said catalysts include the Mannich bases obtained from phenol, p-isononylphenol or bisphenol A by reaction with dimethylamine and formaldehyde in accordance, for example, with Synth. Commun. (1986), 16, 1401-9.

The catalyst is used pure or in solution, in one or more small portions or continuously added in a total quantity ranging between 0.01 % and 0.1 %.

The long-chain alcohol, primary or secondary, straight-chain or branched, has 6 to 20 carbon atoms, possibly separated by oxygen or sulphur atoms. Examples of these alcohols include n-hexanol, n-heptanol, n-octanol, n-nonanol, n-decanol, n-dodecanol, 2-ethylhexanol, n-tetradecanol, n-hexadecanol and n-octadecanol. Epoxylated or propoxylated derivatives can also be used. The percentage of alcohol in the reaction mixture can vary between 0.1 and 20% by weight.

The reaction is preferably terminated when the conversion of the isocyanate monomer groups to isocyanurate groups is between 10 and 80%, preferably between 20 and 70%, and more preferably between 40 and 60%, by adding an inhibitor such as protic acid, acid chlorides or methylating agents, such as methyl p-toluene sulphonate.

The mixture is distilled under vacuum, using the thin-layer technique, to remove the unreacted diisocyanate. The distillation can be performed with conventional thin-layer or short-path equipment, and can be conducted in one or more stages, which may be of different types.

The conditions required to strip TDI from the reaction mixture correspond to a pressure of 1-20 mbars and a temperature of 160-220°C. To obtain products with a low molecular weight, any secondary reactions which may occur at high temperatures during the TDI separation process must be limited, by operating at the lowest possible temperature and with short contact times, to ensure efficient distillation of TDI, thus giving an end product with free TDI < 1%, preferably < 0.5%, and more preferably < 0.1 %.

The product thus obtained is a solid at ambient temperature with a transparent appearance and a vitreous consistency, with an isocyanate-reactive group content of between 10 and 30%, preferably between 15 and 25%, and more preferably between 17 and 21 %, and a toluene diisocyanate content (sum of 2,4 and 2,6 isomers) < 1%.

The solid residue can be dissolved in a suitable solvent to obtain a clear solution with the following characteristics:

| | |
|---|---|
| % non-volatile | 60-80 |
| % NCO | 10-17% |
| % TDI | < 1% |
| Vx | 500-2000 mPas at 23°C. |

Diluents commonly used in polyurethane chemistry can be employed, such as toluene, xylene, cyclohexane, chlorobenzene, butyl acetate, ethyl acetate, ethyl-glycol acetate, pentyl acetate, hexyl acetate methoxypropyl acetate, tetrahydrofuran, dioxolane, acetone, N-methylpyrrolidone, methyl ethyl ketone, aromatics such as Solvent Naphtha®, Solvesso®, Shellsol®, Isopar®, Nappar®, Diasol®, decalin and alkanes with more than 6 carbon atoms, common plasticisers such as phthalates, sulphonates and phosphates, and mixtures thereof.

The product according to the invention can also be modified by adding other aromatic or aliphatic polyisocyanates or both to modify its performance characteristics.

In particular, it has been found that the product according to the invention, despite having a higher NCO percentage content than conventional products, presents a lower degree of branching, which makes it less reactive at the stage of crosslinking with hydroxyl components.

It is therefore ideal to modify the product by adding products with a higher degree of branching such as known polyisocyanate solutions containing isocyanurate groups from TDI, HDI, IPDI or MDI or a mixture thereof (such as POLURENE IR 51 AB®, POLURENE OKD®, POLURENE SB50AB®, POLURENE MD70B-01® commercially manufactured by SAPICI S.p.A, or TOLONATE HDT® manufactured by Perstorp).

The polyisocyanates prepared by this process can be used in the coating after crosslinking under the influence of atmospheric humidity. They can also be used for the production of adhesion promoters, adhesives, printing inks, sealants and moulding polyurethanes.

In particular they are used as crosslinking agents in two-pack systems with reactive compounds known in themselves, which include, for example, polyethers, polyesters, polyamides, polybutadienes, and hybrid forms of said hydroxy-functional polymers.

If the product obtainable by the process according to the invention is used, it is possible to formulate a final two-pack paint with performance characteristics of crosslinking speed, chemical and mechanical resistance similar to those obtained with known solutions of aromatic or mixed aromatic-aliphatic isocyanurates, but with a lower VOC solvent content (40%-20%), and viscosity between 500 and 2000 mPas at 23°C.

The product obtained with the process according to the invention can also be used in the blocked form to formulate one-pack coating systems.

Other conventional paint auxiliaries and additives, such as wettability promoters, levelling agents, solvents, opacifiers, viscosity regulators, pigments, UV absorbers and thermo-oxidative breakdown stabilisers, can also be used for this purpose.

The paints obtained can be used on any substrate, such as wood, plastic, paper, fabric, glass, ceramic, metal or cement.

They can be applied by conventional methods such as spray, spatula, roller or brush application, and may be transparent or pigmented paints or varnishes.

The paints produced by the materials according to the invention crosslink at 20°C, generally in a time ranging from a few minutes to a few hours.

The invention is illustrated in greater detail in the following examples.

### EXAMPLE 1

576 parts of a mixture of toluene diisocyanate isomers, containing approx. 80% 2,4 toluene diisocyanate, are added to a 1 lt flask with stirrer equipped with a reflux condenser and rendered inert with nitrogen. The mixture is heated to 40°C, and 81 parts of n-decanol are added under stirring in 30 minutes. 4.5 parts of a 10% solution by weight in ethyl acetate of a Mannich base prepared from phenol and dimethylamine are added. The mixture is stirred for 10 hours at 55°C, until the free NCO group content is 24% w/w.

The reaction is terminated by adding 4.5 parts of a 50% solution by weight of orthophosphoric acid in ethyl acetate.

The product thus obtained is distilled in a thin-layer evaporator at a pressure of approx. 10 mbars and a temperature of 180°C to remove the unreacted monomer. 420 parts of a solid transparent product with a vitreous consistency, with the following characteristics, are obtained:

| | |
|---|---|
| % NCO | 18.1% |
| % TDI | 0.35% |

200 parts of the product thus obtained are dissolved in 67 parts of ethyl acetate to obtain a clear solution with the following characteristics:

| | |
|---|---|
| % NCO | 13.5% |
| Vx | 820 mPas |
| % non-volatile | 75% |
| % TDI | 0.26%. |

### EXAMPLES 2-13

The product obtained in example 1 is used to formulate two-pack paints for transparent and matt wood undercoats and topcoats.

| ***TWO-PACK PU VARNISH*** | | | ***TWO-PACK PU VARNISH*** | |
|---|---|---|---|---|
| Component A: | | | Component A: | |
| **REXIN HSP 0180AB (1)** | 60.0 | | **REXIN HSP 0285AB (2)** | 60 |
| Zinc Stearate | 2.0 | | Zinc Stearate | 2.0 |
| Talc | 3.0 | | Talc | 3.0 |
| Bentone paste | 2.0 | | Bentone paste | 2.0 |
| Butyl acetate | 14.0 | | Butyl acetate | 16.0 |
| Ethyl acetate | 7.5 | | Ethyl acetate | 8.5 |
| Xylene | 11.0 | | Xylene | 8.0 |
| Byk 346 | 0.5 | | Byk 346 | 0.5 |
| | **100** | | | **100** |

| Component B: | | | Component B: | |
|---|---|---|---|---|
| **EXAMPLE 1** | **61.2** | | **EXAMPLE 1** | 47.6 |
| **POLURENE IR 51 AE (8)** | 25.2 | | **POLURENE IR 51 AE (8)** | 19.6 |
| Ethyl acetate | 3.6 | | Ethyl acetate | 2.8 |
| Butyl acetate | 10.0 | | Butyl acetate | 30.0 |
| | **100** | | | **100** |

| **CHARACTERISTICS** | | | **CHARACTERISTICS** | |
|---|---|---|---|---|
| Solid content of component A | 53.3% | | Solid content of component A | 53.3% |
| Solid content of component A+B | **54.9%** | | Solid content of component A+B | **52%** |
| Proportion A+B | 100:50 | | Proportion A+B | 100:50 |
| Viscosity of component A | 13s | | Viscosity of component A | 16s |
| Viscosity of component A+B | 19s | | Viscosity of component A+B | 17s |
| Dust-free | 8m | | Dust-free | 9m |
| Touch-free | 45m | | Touch-free | 50m |
| Sandability | Good | | Sandability | Good |
| Appearance | Good | | Appearance | Good |
| Pot-life (h) | 2 | | Pot-life (h) | 7 |
| Durometer test after 7 days (N) | 3.0 | | Durometer test after 7 days (N) | 3.0 |
| Taber CS17 500 rpm 1 kg (mg lost) | 70.3 | | Taber CS17 500 rpm 1Kg (mg lost) | 68.4 |

| ***PIGMENTED TWO-PACK PU UNDERCOAT*** | | | ***TWO-PACK PU VARNISH*** | |
|---|---|---|---|---|
| **Component A:** | | | **Component A:** | |
| **REXIN HSP 0285AB (2)** | 43 | | **REXIN HSP 0385AB** (3) | 56.5 |
| | | | Zinc Stearate | |
| Pigmented paste (60% TiO₂) Pigmented | 17 | | Talc | 3.0 |
| Zinc Stearate | 3_{.}0 | | Bentone paste | 2.0 |
| Talc | 10.0 | | Butyl acetate | 2.0 18.0 |
| Calcium carbonate | 23.0 | | Ethyl acetate | 9.5 |
| Bentone 34 | 0.1 | | Xylene | 8.5 |
| Butyl acetate | 1.9 | | Byk 346 | 0.5 |
| MPA | 1.5 | | | **100** |
| Byk 077 | 0.5 | | **Component B:** | |
| | **100** | | **EXAMPLES 1** | 61.2 |
| **Component B:** | | | **POLURENE IR 51 AE (8)** | 25.2 |
| **EXAMPLE 1** | **44.9** | | Ethyl acetate | 3.6 |
| **POLURENE IR 51 AE (8)** | 18.5 | | Butyl acetate | 10.0 |
| Ethyl acetate | 2.6 | | | **100** |
| Butyl acetate | 34.0 | | **CHARACTERISTICS** | |
| | **100** | | | |
| **CHARACTERISTICS** | | | Solid content of component A | 53.3% |
| Solid content of component A | 84.2% | | Solid content of component A+B | **54.9%** |
| Solid content of component A+B | **70.4%** | | Proportion A+B | 100:50 |
| Proportion A+B | 100:50 | | Viscosity of component A | 13s |
| Viscosity of component A+B | 55s | | Viscosity of component A+B | 17s |
| Viscosity of component A+B+25 BA | 16s | | Dust-free | 10m |
| Dust-Gee | 10m | | Touch-free | 90m |
| Touch-free | 45m | | Sandability | Good |
| Sandability | Good | | Appearance | Good |
| Appearance | Good | | Pot-life (h) | 3 |
| Pot-life (h) | 4 | | Durometer test after 7 days (N) | 4.5 |
| Durometer test after 7 days (N) | 2.0 | | Taber CS17 500 rpm 1Kg (mg lost) | 42.7 |
| Taber CS 17 500 rpm 1 Kg (mg lost) | 92.1 | | | |

| ***TWO-PACK TRANSPARENT MATT PU TOPCOAT*** | | | ***TWO-PACK PIGMENTED MATT PU TOPCOAT*** | |
|---|---|---|---|---|
| **Component A:** | | | **Component A:** | |
| **REXIN HSP 0685AB (4)** | 38.0 | | **REXIN HSP 0685AB (4)** | 40.0 |
| **REXIN HS129 (5)** | 14.0 | | Pigmented paste (60% TiO₂) | 50.0 |
| Sylisia 256NF | 7.0 | | Sylisia 256NF | 4.5 |
| Propylmatte 31 | 2.5 | | Propylmatte 31 | 1.0 |
| Minemix 10 | 5.0 | | Butyl acetate | 2.0 |
| Butyl acetate | 14.0 | | MEK | 1.5 |
| Ethyl acetate | 12.0 | | Byk 141 | 0.5 |
| MEK | 6.5 | | Byk 323 | 0.5 |
| Byk 141 | 0.5 | | | **100** |
| Byk 323 | 0.5 | | | |
| | **100** | | | |

| **Component B:** | | | **Component B:** | |
|---|---|---|---|---|
| **EXAMPLE** 1 | **41.1** | | **EXAMPLE** 1 | **45.6** |
| **POLURENE IR** 51 **AE (8)** | 22.6 | | **POLURENE IR 51 AE (8)** | 25.1 |
| **POLURENE MT-100 (9)** | 9.5 | | **POLURENE MT-100 (9)** | 10.6 |
| Ethyl acetate | 0.8 | | Ethyl acetate | 0.7 |
| Butyl acetate | 26.0 | | Butyl acetate | 18.0 |
| | **100** | | | **100** |

| **CHARACTERISTICS** | | | **CHARACTERISTICS** | |
|---|---|---|---|---|
| Solid content of component A | 53.7% | | Solid content of component A | 77.0% |
| Solid content of component A+B | **53.1%** | | Solid content of component A+B | **71.8%** |
| Proportion A+B | 100:50 | | Proportion A+B | 100:50 |
| Viscosity of component A | 16s | | Viscosity of component A+B | 63s |
| Viscosity of component A+B | 16s | | Viscosity of component A+B + 25 BA | 17s |
| Dust-free | 8m | | Solid on application | 61.5% |
| Touch-tree | 40m | | Dust-free | 15m |
| Appearance | Good | | Touch-free | 40m |
| Gloss 60° | 30 | | Appearance | Good |
| Pot-life (h) | 5 | | Gloss 60° | 30 |
| Durometer test after 7 days (N) | 6.5 | | Pot-life (h) | 3 |
| Taber CS 17 500 rpm 1 Kg (mg lost) | 40.8 | | Durometer test after 7 days (N) | 5.0 |
| | | | Taber CS 17 500 mm 1 Kg (mg lost) | 49.3 |

| ***TWO-PACK TRANSPARENT GLOSS PU* *TOPCOAT*** | | | ***TWO-PACK PIGMENTED GLOSS PU TOPCOAT*** | |
|---|---|---|---|---|
| **Component A:** | | | **Component A:** | |
| **REXIN HSP 05100 (6)** | 65.0 | | **REXIN HSP 05100 (6)** | 36 |
| Butyl acetate | 13.0 | | Pigmented paste (60% TiO₂) | 50 |
| Ethyl acetate | 13.0 | | Butyl acetate | 6.9 |
| Xylene | 6.0 | | MPA | 6.5 |
| MPA | 2.0 | | Byk 306 | 0.3 |
| Byk 141 | 0.5 | | Byk 141 | 0.3 |
| Byk 346 | 0.5 | | | **100** |
| | **100** | | **Component B:** | |
| **Component B:** | | | **EXAMPLE 1** | **66.2** |
| **EXAMPLE** 1 | **41.7** | | **POLURENE MT-100 (9)** | 14.6 |
| **POLURENE IR 51 AE (8)** | 23.0 | | Ethyl acetate | 5.2 |
| **POLURENE MT-100 (9)** | 9.7 | | Butyl acetate | 14.0 |
| Ethyl acetate | 0.6 | | | **100** |
| Butyl acetate | **25.0** | | **CHARACTERISTICS** | |
| | 100 | | Solid content of component A | 75.5% |
| **CHARACTERISTICS** | | | Solid content of component A+B | **71.8%** |
| Solid content of component A | 65.1 % | | Proportion A+B | 100:50 |
| Solid content of component A+B | **60.7%** | | Viscosity of component A+B | 30s |
| Proportion A+B | 1:1 | | Viscosity of component A+B+20 BA | 16s |
| Viscosity of component A | 15s | | Dust-free | 35m |
| Viscosity of component A+B+10 BA | 15s | | Touch-free | 6h |
| Dust-free | 40m | | Appearance | Good |
| Touch-free | 7h | | Pot-life (h) | 8 |
| Appearance | Good | | Durometer test after 7 days (N) | 2.0 |
| Pot-life (h) | 8 | | Taber CS 17 500 rpm 1 Kg (mg lost) | 43.2 |
| Durometer test after 7 days (N) | 3.5 | | | |
| Taber CS17 500 rpm 1Kg (mg lost) | 47.7 | | | |

| ***TWO-PACK PU TOPCOAT*** | | | | |
|---|---|---|---|---|
| **Component A:** | | | | |
| **REXIN 143/70 AB (7)** | 73.0 | 63.0 | 52.0 1 | 52.0 |
| Butyl acetate | 11.0 | 16.0 | 22.0 | 22.0 |
| Xylene | 11.0 | 16.0 | 22.0 | 22.0 |
| Bentone paste | 2.0 | 2.0 | 2.0 | 2.0 |
| Zinc Stearate | 3.0 | 3.0 | 2.0 | 2.0 |
| | **100** | **100** | **100** | **100** |

| **Component B:** | | | | |
|---|---|---|---|---|
| Butyl acetate | 13.0 | | | |
| Ethyl acetate | 2.0 | 17.0 | 14.0 | 17.0 |
| **EXAMPLE 1** | **35.0** | | | |
| **POLURENE 60T (10)** | | **36.0** | | |
| **POLURENE SB 50 AB (11)** | | | **33.0** | |
| **POLURENE** KC **(12)** | | | | **33.0** |
| | **50** | **50** | **50** | **50** |

| **CHARACTERISTICS** | | | | |
|---|---|---|---|---|
| Solid content of component A | 56.1% | 49.1% | 41.4% | 41.4% |
| Solid content of component A+B | **52.6%** | **47.1%** | **38.6%** | **38.6%** |
| Proportion A+B | 100:50 | 100:50 | 100:50 | 100:50 |
| Viscosity of component A | 1m05s | 35.5s | 20s | 20s |
| Viscosity of component A+B | 38s | 31s | 19s | 18s |
| Touch-free | 30m | 30m | 30m | 30m |
| Dust-free | 10m | 10m | 10m | 10m |
| Durometer test after 7 days (N) | 4.5 | 4.5 | 4.5 | 4.0 |

| | | | | |
|---|---|---|---|---|
| (1) 80% short-oil alkyd resin in butyl acetate, OH value 120-150 (2) 85% short-oil alkyd resin in butyl acetate, OH value 120-150 (3) 85% short-oil alkyd resin in butyl acetate, OH value 120-150 (4) 85% short-oil alkyd resin in butyl acetate, OH value 120-150 (5) 70% short-oil alkyd resin in butyl acetate, OH value 100-110 (6) 100% short-oil alkyd resin, OH value 160-180 (7) 70% short-oil alkyd resin in butyl acetate, OH value 100-110 (8) TDI polyisocyanate, % NCO 8.0, 50% in ethyl acetate (9) HDI polyisocyanate, % NCO 22.0, 100% NV (10) TDI polyisocyanate, % NCO 10.5, 60% in butyl acetate (11) TDI polyisocyanate, % NCO 8.2, 50% in butyl acetate (12) TDI and MDI polyisocyanate, % NCO 7.9, 50% in butyl acetate | | | | |

Examples 2 to 9 describe standard formulations of two-pack pigmented and unpigmented gloss and matt paints and varnishes, wherein component B is a mixture containing the product obtained in example 1. The paints and varnishes thus formulated produce a dry residue of component A + component B which ranges from 52% to 72%, and a viscosity below 60 secs. Ford 4 cup, with excellent crosslinking speed (8-40 mins. for the dust-free product and 45 mins. to 7 h for the touch-free product) and excellent hardness (> 2 N after 7 days) and Taber test values (< 100 mg lost).

Examples 10 to 13 compare the performance of two-pack paints and varnishes with the same component A and a different component B. As will be seen, using the product obtained with example 1, a final coating is obtained which has a significantly lower VOC solvent content in the mixture of component A + component B than conventional products, and in any event under 50%, while still guaranteeing the same performance in terms of drying/crosslinking times, hardness values and viscosity of application.

## Claims

1. Polyisocyanate obtained by trimerizing toluene diisocyanate, **characterised by**:
- dry residue exceeding 60%, and preferably between 60 and 80% by weight;
- viscosity between 500 and 2000 mPas at 23°C;
- a toluene diisocyanate monomer content of under 1% by weight;
- a mean molecular weight of under 1500 amu;
- an isocyanate-reactive group content exceeding 10% by weight.

2. A process for the preparation of the polyisocyanate disclosed in claim 1 which comprises:
- trimerisation of TDI in the absence of solvent, in the presence of a catalyst and of an alkanol C6-C10;
- termination of the reaction when the conversion of isocyanate monomer groups to isocyanurate groups ranges from 10-70% with an inhibitor selected from protic acids, acid chlorides or methylating agents;
- removal of the unreacted isocyanate by distillation;
- optional dilution of the residue in a solvent.

3. Use of the polyisocyanate disclosed in claim 1, alone or in a mixture with other aromatic or aliphatic polyisocyanates, for the formulation of paints, adhesion promoters, adhesives, printing inks, sealants and moulding polyurethanes.

4. Use as claimed in claim 3 for the formulation of a two-pack paint **characterised by** a dry residue of 60-80% and a viscosity ranging from 500-2000 mPas at 23°C.

5. Paints containing the polyisocyanate disclosed in claim 1.

## Patentansprüche

1. Polyisocyanat, welches durch Trimerisierung von Toluoldiisocyanat erhalten wird, **gekennzeichnet durch**:
- einen Trockenrückstand von mehr als 60 Gew.-% und vorzugsweise zwischen 60 und 80 Gew.-%;
- eine Viskosität zwischen 500 und 2000 mPas bei 23 °C;
- einen Toluoldiisocyanatmonomer-Gehalt von weniger als 1 Gew.-%;
- ein mittleres Molekulargewicht von unter 1500 amu;
- einen Gehalt an Isocyanat-reaktiven Gruppen von mehr als 10 Gew.-%.

2. Ein Verfahren zur Herstellung des Polyisocyanats, welches in Anspruch 1 offenbart ist, das umfasst:
- die Trimerisierung von TDI in der Abwesenheit eines Lösemittels, in der Gegenwart eines Katalysators und einem C6 - C10-Alkanol;
- Beendigung der Reaktion mit einem Inhibitor, ausgewählt aus protischen Säuren, Säurechloriden oder Methylierungsmitteln, wenn ein Bereich der Umwandlung der Isocyanatmonomer-Gruppen zu Isocyanurat-Gruppen von 10 bis 70% erreicht ist;
- Entfernen des unreagierten lsocyanats durch Destillation;
- gegebenenfalls Verdünnen des Rückstands in einem Lösemittel.

3. Die Verwendung des Polyisocyanats, welches in Anspruch 1 offenbart ist, allein oder in einer Mischung mit anderen aromatischen oder aliphatischen Polyisocyanaten zur Herstellung von Farben, Haftvermittlern, Klebstoffen, Druckfarben, Dichtungsmitteln und Polyurethanformteilen

4. Die Verwendung nach Anspruch 3 zur Herstellung einer Zweikomponenten-Farbe, **gekennzeichnet durch** einen Trockenrückstand von 60 bis 80% und einer Viskosität von 500 bis 2000 mPas bei 23 °C.

5. Farben, die das Polyisocyanat nach Anspruch 1 erhalten.

## Revendications

1. Polyisocyanate obtenu par trimérisation de diisocyanate de toluène, **caractérisé par** :
- une teneur en résidus secs excédant 60% et de préférence entre 60 et 80% en poids ;
- une viscosité comprise entre 500 et 2000 mPas à 23°C ;
- une teneur en monomères diisocyanate de toluène inférieure à 1 % en poids ;
- un poids moléculaire moyen inférieur à 1500 amu ;
- une teneur en groupes réactifs isocyanate excédant 10% en poids.

2. Procédé de préparation du polyisocyanate mentionné dans la revendication 1 qui comprend :
- la trimérisation du TDI en l'absence de solvant, en présence d'un catalyseur et d'un alcanol en C₆-C₁₀;
- l'achèvement de la réaction lorsque la conversion des groupes monomères diisocyanate en groupes isocyanurates s'étend de 10-70% avec un inhibiteur sélectionné parmi les acides protiques, les chlorures d'acide ou les agents de méthylation ;
- l'élimination de l'isocyanate n'ayant pas réagi par distillation ;
- la dilution facultative du résidu dans un solvant.

3. Utilisation du polyisocyanate selon la revendication 1, seul ou en mélange avec d'autres polyisocyanates aromatiques ou aliphatiques, pour la formulation de peintures, de promoteurs d'adhésion, d'adhésifs, d'encres d'impression, de masses d'étanchéité et de polyuréthanes de moulage.

4. Utilisation telle que revendiquée selon la revendication 3 pour la formulation d'une peinture en deux conditionnements séparés, **caractérisée par** une teneur en résidus secs de 60-80% et une viscosité s'étendant de 500-2000 mPas à 23°C.

5. Peintures contenant le polyisocyanate selon la revendication 1.
